(19)

**Europäisches Patentamt**
**European Patent Office**
**Office européen des brevets**

(11) **EP 3 027 713 B1**

(12) **EUROPEAN PATENT SPECIFICATION**

(45) Date of publication and mention
of the grant of the patent:
**20.06.2018 Bulletin 2018/25**

(21) Application number: **14744901.1**

(22) Date of filing: **16.07.2014**

(51) Int Cl.:
*H01M 8/0612* (2016.01)       *H01M 8/0668* (2016.01)
*H01M 8/1246* (2016.01)       *H01M 8/04089* (2016.01)
*C10J 3/00* (2006.01)       *H01M 8/22* (2006.01)
*H01M 8/124* (2016.01)

(86) International application number:
**PCT/GB2014/052163**

(87) International publication number:
**WO 2015/015161 (05.02.2015 Gazette 2015/05)**

(54) **ENERGY GENERATION PROCESS**

ENERGIEERZEUGUNGSVERFAHREN

PROCÉDÉ DE GÉNÉRATION D'ÉNERGIE

(84) Designated Contracting States:
**AL AT BE BG CH CY CZ DE DK EE ES FI FR GR
HR HU IE IS IT LI LT LU LV MC MK MT NL NO PL
PT RO RS SE SI SK SM TR**

(30) Priority: **30.07.2013   GB 201313554**

(43) Date of publication of application:
**08.06.2016   Bulletin 2016/23**

(73) Proprietor: **Origen Power Ltd
Aldridge
Walsall
WS9 8LZ (GB)**

(72) Inventor: **KRUGER, Tim
Aylesbury
Buckinghamshire HP17 8HE (GB)**

(74) Representative: **Thurston, Joanna
Withers & Rogers LLP
4 More London Riverside
London SE1 2AU (GB)**

(56) References cited:
**WO-A2-2008/027285      US-A1- 2009 004 529**

**Description**

Field

The invention relates to an energy generation process, in particular to energy generation using fuel cells, to an apparatus for energy generation and to the use of the apparatus.

Background

Despite an awareness of issues like global warming, and finite natural resources, it remains the case that the human population places ever increasing demands on our surroundings. This is particularly the case with our demand for energy, in particular electricity. To compensate for this many "alternative" forms of electricity generation have been developed and commercialised in recent years. US 2009/004529 discloses an electrical energy generation system which includes at least one solid oxide fuel cell, and a conversion bed for conversion of carbon dioxide gas to carbon monoxide. Carbon monoxide generated is oxidised at the anode to produce electric power.

It is often a secondary goal of these alternative forms of energy generation to provide "clean" electricity. This is often done by avoiding traditional combustion methods, and instead harnessing other forms of energy, such as the kinetic energy of the wind or tide, or heat from geothermal springs. One problem with these types of energy generation is that they are limited as to geography, only being of use where the source of energy is abundant. It is therefore desirable to complement these solutions with other energy sources, such as chemical based generation methods, which are less reliant on their environment for application.

Traditional combustion methods would fall within the category of chemical energy generation, and have the advantage that (subject to the availability of the raw materials), they can be applied on a small or large scale in a wider variety of locations. Battery technology also relies on the conversion of chemical energy to electricity, as does fuel cell technology. However, the problem with many methods of generating electricity from chemical energy is that they release harmful by-products as part of the chemical reaction, such as carbon dioxide ($CO_2$), which acts as a greenhouse gas resulting in climate change. It is therefore desirable to provide an alternative form of energy generation, which whilst harnessing chemical energy produces by-products which are either environmentally benign, or in a form where they can be easily stored or reused.

In addition, with regard to the problem of greenhouse gas emission, it would be desirable to provide a method of energy generation which is carbon neutral or carbon negative (that is to say, a process that acts to remove carbon dioxide from the atmosphere), in particular with regard to the emissions of carbon dioxide.

Further, the calcination of metal oxides, such as the calcination of limestone ($CaCO_3$) to produce lime (CaO) is a major cause of greenhouse gas emissions as the carbon dioxide produced in the production of lime is often simply released to the atmosphere. It has been estimated that limestone calcination alone contributes to around 5% of global carbon dioxide emissions, equating to around 1.5 billion tonnes of emissions per annum. WO 2008/027285 discloses methods and systems for the production of high quality carbon dioxide. Moreover it also discloses a process for calcining calcium carbonate by use of a kraft or alternative alkali-based paper pulp manufacturing operation. It would be advantageous to provide a calcination method in which the carbon dioxide produced could be captured and if appropriate, sequestered without the need for complex processing of the carbon dioxide.

The invention is intended to overcome or ameliorate at least some aspects of these problems.

Summary

Accordingly, in a first aspect of the invention there is provided an energy generation process as defined in claim 1. The process comprising the oxidation of carbon monoxide (CO) to carbon dioxide in a fuel cell. Typically, in accordance with the following reaction:

$$2CO + O_2 \rightarrow 2CO_2$$

For many fuel cells, carbon monoxide acts as a 'poison', preventing the fuel cell from operating. However, some types of fuel cells, namely Solid Oxide Fuel Cells (SOFCs) and Molten Carbonate Fuel Cells (MCFCs) are not poisoned by carbon monoxide and can utilise carbon monoxide as a fuel. Currently, however SOFCs and MCFCs are not designed to run exclusively or primarily on carbon monoxide and the fuel cell used in the invention is specifically adapted to run exclusively on carbon monoxide.

The oxidation of carbon monoxide to carbon dioxide is an exothermic reaction, releasing 283 kJ of energy per mol of CO reacted. In this invention, the energy will typically be converted into electricity and/or heat, although other uses are envisaged, including the use of the energy as heat to drive other chemical reactions, as described below.

It will often be the case that the carbon monoxide will be produced from carbon dioxide and carbon. This is a reverse Boudouard reaction, as shown:

$$CO_2 + C \rightarrow 2CO$$

As such, the process may include an additional step of forming carbon monoxide from carbon dioxide and carbon in a reverse Boudouard reaction.

The reverse Boudouard reaction is a reversible endothermic reaction, requiring 172.5 kJmol$^{-1}$ to drive the reaction. This heat may be generated using energy sourced from the oxidation of carbon monoxide to carbon dioxide described above. Where this is the case, the energy may be released as heat from the fuel cell, or converted to electricity which is then used to heat the reaction. If the temperature of reaction drops, the equilibrium shifts to the left, and the carbon monoxide reverts to carbon dioxide. For this reason, it is desirable to maintain high operating temperatures (which favour the forward reaction as shown) where the reverse Boudouard reaction is being used.

It should be noted that as used herein references to the energies required to drive the reaction, or which are released from the reactions, as cited in kJmol$^{-1}$ are the enthalpy calculations at standard temperature and pressure.

Often the source of carbon will be coke, as this is generally the most cost effective source of carbon available, although other carbon sources may also be used. The coke will often be heated to a temperature in the range 800 - 1400K, on many occasions in the range 950 - 1250K, or in the range 1000 - 1250K. At these temperatures the equilibrium for the reaction is to the right, strongly favouring the formation of carbon monoxide.

Additionally or alternatively, the carbon monoxide may be generated through the reaction of carbon dioxide with one or more hydrocarbons. Often these will be saturated hydrocarbons such as alkanes, although alkenes and alkynes may also be used. Often, where a hydrocarbon is used, this will be a $C_1$-$C_4$ hydrocarbon, often $C_1$-$C_4$ alkane. Often, methane or ethane will be selected as these components are readily available and transportable and easy to obtain in a relatively pure form. In such cases, the reaction would become, for instance with methane:

$$CO_2 + CH_4 \rightarrow 2CO + 2H_2$$

Whilst with the above reaction the carbon monoxide and the hydrogen may be separated, which can increase costs, the use of hydrocarbons has the advantage that more energy is released per mole of carbon dioxide reacted than where carbon itself is used. Further, it will often be the case that the carbon monoxide and hydrogen are not separated, but together transferred to the fuel cell for oxidation to form carbon dioxide and water (in the form of steam). At this point it is simple to separate the steam and carbon dioxide if desired through condensation of the steam, and the oxidation of the hydrogen produces additional energy. It can also be difficult to source sufficiently pure carbon for reaction with the carbon dioxide, a problem avoided through the use of hydrocarbons which are readily available in pure form. In addition, the presence of hydrogen, or if this has reacted to form water, steam, in the system can help to prevent the build up of carbon within the fuel cell, reducing maintenance costs and system down-time. Finally, hydrogen is a valuable product, which can be burned to form water and energy, perhaps as part of the process described above, or in a secondary fuel cell. Alternatively, the hydrogen can be stored for later conversion into alternative products.

The source of carbon dioxide is a metal carbonate, such as magnesium carbonate or calcium carbonate, although often calcium carbonate will be used because of its low cost and ready availability. As such, and the process includes the step of producing the carbon dioxide from the calcination of a metal carbonate, such as calcium carbonate. This reaction follows the formula:

$$CaCO_3 \rightarrow CaO + CO_2$$

The calcination reaction is endothermic, for calcium carbonate requiring 178 kJmol$^{-1}$ to drive the reaction. As with the reverse Boudouard reaction above, this heat may be generated using energy sourced from the oxidation of carbon monoxide to carbon dioxide using the methods described above.

Often the source of calcium carbonate is limestone, for cost and availability reasons. Where magnesium carbonate is used, this will often be magnesite as this is the dehydrated form of the magnesium carbonate. With the hydrated magnesium carbonates, the water of hydration, released as steam in the calcination process, must be separated from the carbon dioxide, increasing system complexity and costs. Temperatures will generally also be as described above, so calcination can occur at temperatures in the range 800 - 1400K, on many occasions in the range 950 - 1250K, or in the range 1000 - 1250K.

As such, the overall process of the invention comprises three steps:

a) calcining a metal carbonate, typically calcium carbonate, to produce calcium oxide and carbon dioxide;
b) reacting the carbon dioxide with carbon and/or hydrocarbon to produce carbon monoxide; and

c) oxidising the carbon monoxide to carbon dioxide in a fuel cell.

Steps a) and b) may be carried out in a single reaction vessel, the carbon monoxide being transferred from this vessel to a fuel cell for the oxidation step c). Advantages of using only a single reaction vessel for steps a) and b) is that only a single vessel must be heated, and that the carbon dioxide produced in step a) can react with the carbon or hydrocarbon without delay. Alternatively, two vessels may be used, where the gas and/or heat recycling within the apparatus is such that system efficiency is improved.

Where limestone is used, the three step reaction scheme for steps a) to c) would be:

a)

$$CaCO_3 \rightarrow CaO + CO_2$$

b)

$$CO_2 + C \rightarrow 2CO$$

c)

$$2CO + O_2 \rightarrow 2CO_2$$

Where an alternative metal carbonate is used, the reaction of step a) will simply liberate an alternative metal oxide, although stoichiometries may, of course, vary. Where step b) involves a hydrocarbon, for instance methane, step b) becomes:

$$CO_2 + CH4 \rightarrow 2CO + 2H_2$$

again, for other hydrocarbons, the reaction products will remain the same, but reaction stoichiometries will change. Step c) then becomes:

$$CO + H_2 + O_2 \rightarrow CO_2 + H_2O$$

Providing an overall reaction scheme (1) of:

$$CaCO_3 + C + O_2 \rightarrow CaO + 2CO_2 \qquad (1)$$

Of course, where hydrocarbon is burned, continuing with the example of methane, the overall reaction scheme (2) becomes:

$$CaCO_3 + CH_4 + 2O_2 \rightarrow CaO + 2CO_2 + 2H_2O \qquad (2)$$

Whether carbon monoxide or a combination of carbon monoxide and hydrogen is used, often the oxidation will be oxidation with oxygen gas. This will often be sourced from air. Air may be used, as only the oxygen in the air will migrate across the fuel cell, allowing easy separation of the oxygen, the other components being released as a separate flue gas. As such, the oxygen used in the oxidation reaction is of a good level of purity, and the carbon dioxide produced is correspondingly pure. As used herein, the term "pure", regardless of the substance to which it is applied, may mean that the substance has in the range 0% to 1% impurities, at most 1%, often in the range 0.0001% to 1%, or 0.001% to 0.5% impurities.

In some instances, there may be unreacted carbon monoxide (and optionally hydrogen) exiting the fuel cell with the carbon dioxide (and optionally water). In such cases, the carbon monoxide and if appropriate hydrogen and/or water can be separated from the carbon dioxide so that the carbon dioxide passed for sequestration is pure. There may therefore be the additional step of separating carbon dioxide from the other gases exiting the fuel cell, such as carbon monoxide, hydrogen and water after oxidation. The separated carbon monoxide and optionally hydrogen can be recycled through the fuel cell, for a second pass at oxidation, or diverted (as will typically be the case with water) and used elsewhere either in the system or externally. For instance, the unreacted carbon monoxide may be oxidised in an after-burner. As with the fuel cell reaction, this second oxidation step will typically be with pure oxygen, however, as the fuel cell will not be used to extract the oxygen from air, an alternative source of pre-purified oxygen is typically used. This prevents nitrogen from interfering with the reaction, and removes the need to separate nitrogen from the carbon dioxide produced. In addition, the oxidation will occur at a higher flame temperature, and this heat can be used to boost the reaction temperature of the endothermic reactions. It may be, therefore, that the fuel cell is engineered to run at sub-optimal efficiency with respect to the conversion of carbon monoxide to carbon dioxide, such that a proportion, perhaps in the range 5% - 30%, perhaps in the range 10% - 25%, perhaps in the range 15 - 20% is passed through the fuel cell unreacted. The subsequent oxidation of the unreacted carbon monoxide can then be used to promote the endothermic reactions of steps b) and c), by producing additional heat. The oxygen could be derived from a cryogenic air separation unit, if undertaken at large scale, or from electrolysis if undertaken at a smaller scale. In addition, water produced may be used, as described above, as a source of heat and/or kinetic energy. The water will exit the fuel cell as steam, which is both hot and in motion. The heat can be extracted and converted to electricity, and the movement of the steam exploited in the generation of electricity which could be used to assist in driving reactions a) and b) as appropriate.

The overall reaction products, as shown in (1) are therefore lime and carbon dioxide. As explained, because a fuel cell is used, the oxidation reaction is a clean reaction, in the sense that the carbon dioxide produced is pure. This makes it very easy to sequester the carbon dioxide, or store it for use or resale. A further benefit of producing pure carbon dioxide is that there is no energy penalty resulting from the need to purify or concentrate the carbon dioxide prior to storage as would be the case for carbon dioxide released from conventional flue gases from power plants or calcination processes. As such, the process claimed may comprise the additional step of sequestering the carbon dioxide. The sequestration techniques used will generally be conventional and well known to those skilled in the art. Often sequestration will be geological sequestration.

The overall reaction products as shown in (2) are therefore lime, carbon dioxide and water. The use of a fuel cell ensures that we have a clean reaction and so the carbon dioxide and water produced are pure, and it is therefore simple to separate the carbon dioxide and water from one another, for instance by condensation such that the carbon dioxide can be sequested or used and the water released as a liquid to the environment. Alternatively, the water (which would be produced as steam) can be used to help heat reactions a) and/or b), or passed through a steam turbine to generate electricity which can be stored, or used to directly heat these reactions. The production of steam and the conversion of this heat and kinetic energy to electricity can be useful in terms of the flow of energy through the process, as this conversion is a useful way of moving the "heat" around within the system, the extraction of the energy from the steam and conversion to electricity allowing the "sinking" of the energy into a readily movable form, the electricity being converted to heat energy using known methods and used where it is required, most often in the driving of endothermic reactions a) and/or b) above.

Where other metal carbonates are used, often, the metal oxide will be selected from magnesia, and/or periclase.

The metal oxide may be sold, or used as a form of carbon dioxide sequestration, as lime (for instance) may recarbonate to calcium carbonate in air, or when placed in sea water may form a solution of calcium hydrogen carbonate ($Ca^{2+}_{(aq)}2HCO_3^{-}_{(aq)}$). This recarbonation of the metal oxide leads to a carbon negative energy generation process, if this step is not present the energy generation process is carbon neutral by virtue of the sequestration of the carbon dioxide produced, but it is advantageous to include this final step such that the process is carbon negative. An advantage of the process of the invention is therefore that it provides clean, non-polluting energy, as of the two by-products, the metal oxide is both benign and has a wide variety of uses, and carbon dioxide is suitable for direct sequestration upon exit from the fuel cell, or storage for alternative use. As there is no release of this greenhouse gas to the environment, the invention provides an energy generation system which is carbon neutral, and therefore of huge potential in helping to address the need for clean energy generation. Further, if the metal oxide is recarbonated, either as part of the process, or at some point in the future where it's final use involves recarbonating, the process becomes carbon negative. Finally, water, once any associated heat has been extracted or allowed to dissipate, can be released in liquid form. This can be done with minimal cost as the water produced from the fuel cell is sufficiently pure that no harm would be caused to the aquatic or marine environment through direct release into the water courses.

Alternatively, the process of the invention could be considered as an enhanced calcination process. Currently employed methods of calcining metal oxides such as magnesite ($MgCO_3$), the other mineral forms of magnesium carbonate, or limestone release carbon dioxide to the atmosphere, so a reduction in this release would benefit the environment and redesigning the process so that it is carbon negative would be a major step forward. Further, all calcination processes are energy intensive, the provision of a process which is less energy intensive, or from which electricity can be produced would be hugely beneficial. The process claimed can provide both of these benefits.

A further advantage of the invention is the absence of catalysts, which reduces operating costs, and removes the need to dispose of the generally toxic catalyst when they become poisoned. There is therefore provided a process for the oxidation of carbon monoxide to carbon dioxide in the absence of a catalyst. The calcination and reverse Boudouard reactions can also occur in the absence of a catalyst.

In a second aspect of the invention there is provided an apparatus which is used for the energy generation process as defined in claim 1, comprising a calcination unit in fluid communication with a fuel cell. The combination of a calcination unit and fuel cell allows for the apparatus to carry out the process of the first aspect of the invention.

Reactions a) and b) are carried out in the calcination unit, with reaction c) being carried out in the fuel cell, such that the same vessel will be used for both the calcination and carbon monoxide generation reaction. As a result, it can be of use if the calcination unit is in thermal communication with the fuel cell, such that heat generated by reaction c) can be used to drive reactions a) and b). This thermal communication may be via conducting metals, heat exchangers, through communication of the hot flue gases exiting the fuel cell with the calcining unit, the heat from the flue gases being used to heat the calcining unit, and produce the metal oxide and carbon monoxide. It is generally the case that heat exchangers, electrical heaters or direct communication of flue gases with the calcining unit will be used.

It is often the case that the fuel cell is a high temperature fuel cell, such as a solid oxide fuel cell (SOFC), although other high temperature fuel cells may also be used, including molten carbonate fuel cells (MCFC). The fuel cells used with the apparatus of the invention will be adapted so that carbon monoxide is the primary source of fuel. Carbon monoxide may be the only source of fuel.

The fuel cells may be arranged to multiply their energy production using typical methods such as the formation of fuel cell stacks or placing multiple fuel cells in series, as would be known to the person skilled in the art.

As used herein, the term "high temperature fuel cell" is intended to mean fuel cells with operating temperatures in the range 900 - 1200K, often in the range 950 - 1150K. In general usage, this term would often include operational temperatures as low as 700K, however, it is generally the case that in order to maintain the equilibrium in the reverse Boudouard reaction to the right, favouring the production of carbon monoxide, higher temperatures will be used in the fuel cells used in the apparatus and process of the invention. Often SOFC's will be used as these are resilient to carbon monoxide poisoning. Where the typical operating temperature of the fuel cell selected for use in the process of the invention is lower than 900K, the temperature can be increased. This may be through combustion of some of the carbon monoxide produced in the reverse Boudouard reaction, or through the use of a heat pump, for instance some of the energy produced by the fuel cell reaction (c) could be used to heat the cell itself.

It may be the case that an afterburner is present in the apparatus, to oxidise (after separation) unreacted carbon monoxide exiting the fuel cell with the carbon dioxide. As with the fuel cell reaction, the oxidation will typically be with pure oxygen, however, as described above, the source of the oxygen is typically not air. Instead, the oxygen will often be derived from a cryogenic air separation unit, if undertaken at large scale, or from electrolysis if undertaken at a smaller scale. The heat generated by the afterburner can be used to drive either or both of the reactions of steps a) and b) of the process of the invention.

The calcination unit may be a single unit (single reaction vessel) in which reactions a) and b) are completed, although two vessels, such as a calciner and a carbon reactor, may be used providing that the carbon dioxide produced in the calciner may be transferred to the carbon reactor (the vessel housing the reverse Boudouard reaction) quickly and without loss. Simple piping will generally be suitable to achieve this. The calcination unit generally comprises a fluidised bed, although any heating vessel may be used, including shaft furnaces, rotary kilns, and multiple hearth furnaces. A combination of vessels may also be used, particularly where reactions a) and b) are to be completed in different vessels.

If necessary, some or all of the gases released from the fuel cell after reaction c) may be recycled, to ensure complete conversion of carbon monoxide to carbon dioxide. To avoid recycling the carbon dioxide generated, this may be separated from any unreacted carbon monoxide, oxygen in addition to hydrogen and water if present, so that it can be sequestered in pure form, and with the additional separation of water, to ensure that only the starting materials are returned to the fuel cell.

Overall reaction (1) is exothermic and the energy released in step c) can be used to drive steps a) and b) as described above, the remaining energy being stored, or convened to electricity. In some examples, roughly 30% of the heat generated by the oxidation of carbon monoxide to carbon dioxide in step c) may be converted to electricity, the remaining 70% being used to drive endothermic steps a) and b). This results in a roughly 40% efficiency of conversion of the chemical energy in the carbon in reaction (1), and the production of 170 kJmol$^{-1}$ electricity.

$$CaCO_3 + C + O_2 \rightarrow CaO + 2CO_2 \qquad (1)$$

This is similar to the efficiency of a conventional fossil fuel powered station, although the process described herein also produces lime as a useful by-product and carbon dioxide in a readily sequesterable form. Similar efficiencies are observed with other metal oxides, and This is similar to the efficiency of a conventional fossil fuel powered station, although the process described herein also produces lime as a useful by-product and carbon dioxide in a readily sequesterable form. Similar efficiencies are observed with other metal oxides, and where hydrocarbons are substituted for carbon, as shown in reaction scheme (2). For instance, the specific example of methane shown in reaction scheme 2 produces 569 kJmol$^{-1}$ electricity. It will be appreciated, however, that greater efficiencies can be achieved through the use of after burners, or through the oxidation of both carbon monoxide and hydrogen (for instance where hydrocarbons are used as shown in reaction scheme (2)). These efficiencies are therefore illustrative of a minimum efficiency that could be achieved through the invention.

Further the carbon-negative effect provided by the invention, through sequestration or storage for alternative use and recarbonation of the metal oxide can be in the range -550 $gCO_2$/kWhr to -1200 $gCO_2$/kWhr.

The invention therefore provides a process, apparatus and use in which the following steps can be included:

a) calcining calcium carbonate to produce calcium oxide and carbon dioxide;
b) reacting the carbon dioxide with carbon to produce carbon monoxide;
c) oxidising the carbon monoxide to carbon dioxide in a fuel cell;
d) sequestering the carbon dioxide, and
e) optionally recarbonating the calcium oxide.

Steps a) and b) will generally be carried out on a fluidising bed, the resulting carbon monoxide being transferred to a SOFC for reaction with oxygen from the air and conversion to carbon dioxide. The heat energy available from the hot flue gases exiting the fuel cell can be used to drive the reactions of steps a) and b), and the remaining energy can be converted to electricity.

The recarbonation of the calcium oxide as described in step e) above, causes the process to be carbon negative (as opposed to carbon neutral where only sequestration of the carbon dioxide occurs). As described above, this may be through the formation of calcium hydrogen carbonate solutions in sea water, or recarbonation of the solid calcium oxide to calcium carbonate. Many of the uses of calcium oxide involve their recarbonation, even if years later (for instance, the use of calcium oxide in cement carbonates during the setting of the cement), As such, even if the process of the invention, as carried out on site is apparently carbon neutral, it will often, in fact, ultimately be carbon negative.

Unless otherwise stated each of the integers described in the invention may be used in combination with any other integer as would be understood by the person skilled in the art. Further, although all aspects of the invention preferably "comprise" the features described in relation to that aspect, it is specifically envisaged that they may "consist" or "consist essentially" of those features outlined in the claims. In addition, all terms, unless specifically defined herein, are intended to be given their commonly understood meaning in the art.

Further, in the discussion of the invention, unless stated to the contrary, the disclosure of alternative values for the upper or lower limit of the permitted range of a parameter, is to be construed as an implied statement that each intermediate value of said parameter, lying between the smaller and greater of the alternatives, is itself also disclosed as a possible value for the parameter.

In addition, unless otherwise stated, all numerical values appearing in this application are to be understood as being modified by the term "about".

Brief Description of the Drawings

In order that the present invention may be more readily understood, it will be described further with reference to the figures and to the specific examples hereinafter.

Figure 1 is a schematic representation of a conventional calcination process;
Figure 2 is a schematic representation of the process claimed in which a single vessel is used for reactions a) and b);
Figure 3 is a schematic representation of the fuel cell reaction for use in the claimed invention; and
Figure 4 is a schematic representation of the process claimed in which different reaction vessels are used for reactions a) and b).

Detailed Description

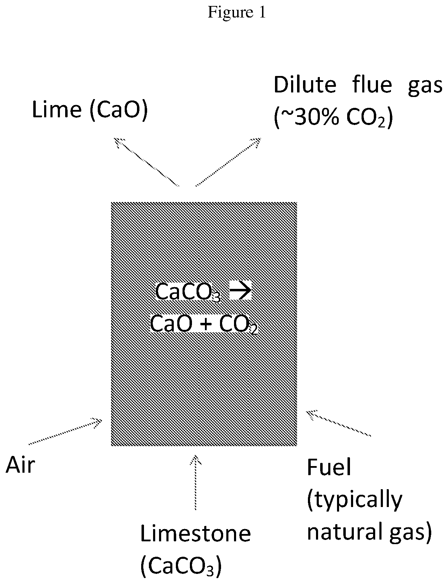

Figure 1 shows a conventional calcination process, in which limestone and air are heated to produce lime and flue gases including the carbon dioxide released from the limestone. In such processes, the carbon dioxide is typically allowed to escape to the atmosphere, with detrimental environmental effect, and so the only desirable product of the process is the lime.

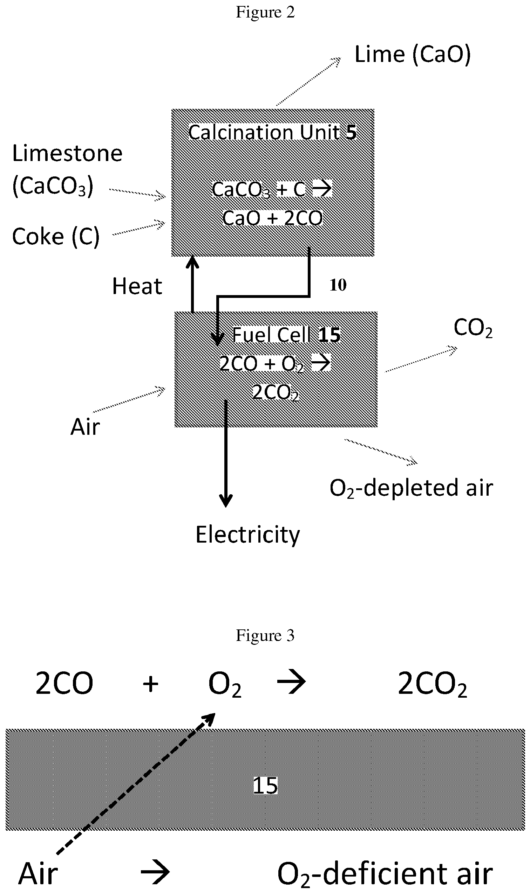

Figure 2 shows the process of the invention, comprising an initial limestone calcination step, in calcination unit 5, to produce carbon dioxide, followed by reaction with coke in a reverse Boudouard reaction, to produce carbon monoxide, also in calcination unit 5. In this example, a fluidised bed (not shown) is used and both reactions are carried out simultaneously at a temperature of 1200K ($\pm$50K). The carbon monoxide produced is transferred through piping 10 to a solid oxide fuel cell 15, also operating at a temperature of 1200K ($\pm$50K), where this is mixed with oxygen to produce carbon dioxide. The oxygen is drawn from air, and separated by migration through the fuel cell 15 (as shown in Figure 3). The hot oxygen-depleted air is passed through a heat exchanger (not shown) to heat the calcination unit 5, to heat the bed itself and to drive the reactions occurring in the fluidised bed. The carbon dioxide produced is of sufficient purity that it can be directly sequestered, but at the point of exit from the fuel cell, the carbon dioxide is at a temperature of around

1200K ($\pm$50K). To ensure that the maximum benefit is obtained from this heat energy, prior to sequestration the carbon dioxide is passed through a heat exchanger (not shown), the heat being used to preheat the gases entering the calcination unit 5.

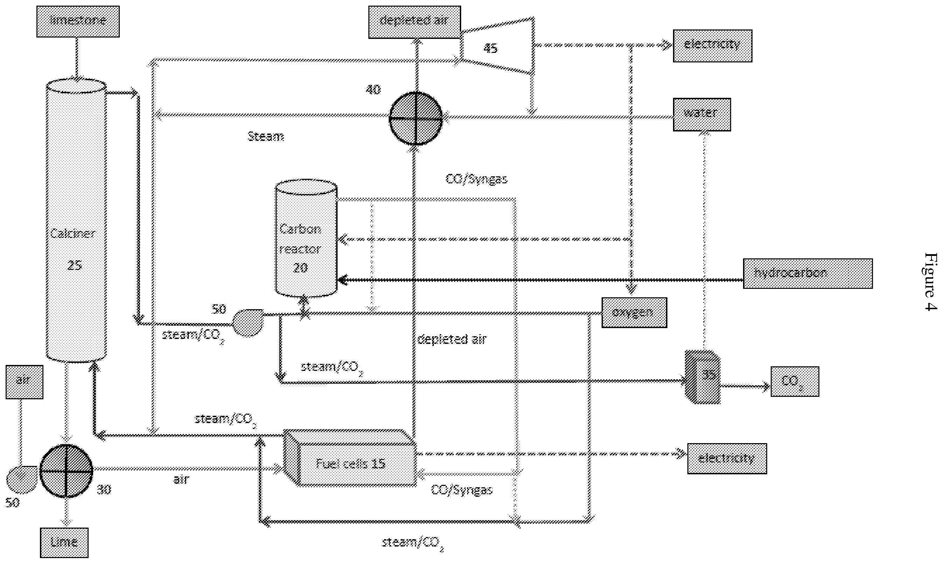

Alternatively, as shown in Figure 4, separate vessels may be used, such as that calcination unit 5 comprises a carbon reactor 20 and a calciner 25. In both cases, these will be fluidised beds and this figure provides a schematic flow diagram of the various components of reactions of steps a)-c) through a calcination plant. In this process limestone is fed into the calciner 25, and reacted with a stream of steam and carbon dioxide from fuel cell stack 15. Lime, steam and carbon dioxide are produced, all at high temperature. The lime is passed through a heat exchanger 30 before removal from the system, the heat being used to heat air for the fuel cells 15. The steam and carbon dioxide are passed to carbon reactor 20 for reaction with a mixture of gaseous hydrocarbons to produce carbon monoxide and syngas. At this point, some of the steam and carbon dioxide is removed from the system, being separated by a condenser 35, the carbon dioxide being sequestered and the water recycled within the system. This sequestration of carbon dioxide creates a carbon neutral process. The carbon monoxide and syngas released from the carbon reactor 20 pass to the fuel cell stack 15, where they are oxidised as shown in Figure 3. In this example, the steam and carbon dioxide produced are passed to the calciner 25, the carbon neutral effect of the system being from the removal of carbon dioxide after the calcination stage, although carbon dioxide could equally be removed at this point in the process. In this example, the hot oxygen depleted air is passed through a heat exchanger 40, the heat being used to create steam for use in the calcination process, and to power turbines 45 ensuring that no energy created by the process is wasted. Fans 50 are used to move the gases around the apparatus.

The process of the invention therefore provides a limestone calcination method in which not only is energy generated, but in which carbon dioxide is produced in a directly sequesterable form. The process also provides for electricity generation which is carbon neutral or negative, clean and produces lime as a saleable by-product.

Examples

**Energy Calculations**

The energy calculations for the process of the invention are as follows:

a)

$$CaCO_3 \rightarrow CaO + CO_2 \quad \Delta H = +178 \text{ kJmol}^{-1}$$

b1)

$$CO_2 + C \rightarrow 2CO \quad \Delta H = +172.5 \text{ kJmol}^{-1}$$

b2)

$$CO_2 + CH_4 \rightarrow 2CO + 2H_2 \quad \Delta H = +247 \text{ kJmol}^{-1}$$

a) + b1)

$$CaCO_3 + C \rightarrow CaO + 2CO \quad \Delta H = +350.5 \text{ kJmol}^{-1}$$

a) + b2)

$$CaCO_3 + CH_4 \rightarrow CaO + 2CO + 2H_2 \quad \Delta H = +425 \text{ kJmol}^{-1}$$

c)

$$2CO + O_2 \rightarrow 2CO_2 \quad \Delta H = -283 \text{ kJ of energy per mol of CO}$$

$$2CO + 2O_2 + 2H2 \rightarrow 2CO_2 + 2H_2O \quad \Delta H = -569 \text{ kJ of energy per mol of CO}$$

As the electrical efficiency of a solid oxide fuel cell is generally around 50%, however, in order to generate more heat for driving the endothermic reactions, the fuel cell of the examples are run at 30% efficiency. At this efficiency the fuel cell generates:

$$30\% \times 566kJ = 170kJ \text{ electricity}$$

$$70\% \times 566kJ = 396kJ \text{ heat}$$

It is the 396 kJ of heat which is used to drive reactions a) and b).

It should be appreciated that the processes and apparatus of the invention are capable of being incorporated in the form of a variety of embodiments, only a few of which have been illustrated and described above.

**Claims**

1. An energy generation process comprising the following steps:

    a) calcining a metal carbonate to produce a metal oxide and carbon dioxide;
    b) reacting the carbon dioxide with carbon and/or hydrocarbon to produce carbon monoxide; and
    c) oxidising the carbon monoxide to carbon dioxide in a fuel cell.

2. An energy generation process according to claim 1, wherein the metal carbonate comprises calcium carbonate.

3. An energy generation process according to claim 1 or claim 2, wherein oxidation comprises oxidation with oxygen gas.

4. An energy generation process according to claim 3, wherein the oxygen gas comprises oxygen separated from air by migration across the fuel cell.

5. An energy generation process according to any preceding claim, comprising the additional step of separating unreacted carbon monoxide from the carbon dioxide released from the fuel cell.

6. An energy generation process according to claim 5, wherein the separated carbon monoxide is oxidised, the oxidation generating heat to drive the production of carbon monoxide from carbon dioxide and carbon, or a hydrocarbon; and/or the production of carbon dioxide by calcination of a metal oxide.

7. An energy generation process according to any preceding claim, comprising the additional step of sequestering the carbon dioxide.

8. An energy generation process according to any preceding claim, comprising the additional step of recarbonating metal oxide produced in the step of producing the carbon dioxide from the calcination of a metal carbonate.

9. An apparatus comprising a calcination unit in fluid communication with a fuel cell, wherein reactions a) and b) of the energy generation process of any preceding claim are carried out in the calcination unit, and reaction c) of any preceding claim is carried out in the fuel cell.

10. An apparatus according claim 9, wherein the calcination unit is in thermal communication with the fuel cell.

11. An apparatus according to claim 9 or claim 10, wherein the fuel cell is a solid oxide fuel cell.

12. An apparatus according to any of claims 9 to 11, wherein the calcination unit comprises a fluidized bed.

13. An apparatus according to any of claims 9 to 12 comprising an after-burner in fluid communication with the fuel cell for receipt of unoxidised carbon monoxide.

**Patentansprüche**

1. Ein Energieerzeugungsverfahren, umfassend die folgenden Schritte:

    a) Kalzinieren eines Metallkarbonats, um ein Metalloxid und Kohlendioxid zu erzeugen;

b) Reagieren des Kohlendioxids mit Kohlenstoff und/oder Kohlenwasserstoff, um Kohlenmonoxid zu erzeugen; und

c) Oxidieren des Kohlenmonoxids zu Kohlendioxid in einer BrennstofFzelle.

2. Ein Energieerzeugungsverfahren nach Anspruch 1, wobei das Metallkarbonat Kalziumkarbonat umfasst.

3. Ein Energieerzeugungsverfahren nach Anspruch 1 oder 2, wobei die Oxidation eine Oxidation mit Sauerstoffgas umfasst.

4. Ein Energieerzeugungsverfahren nach Anspruch 3, wobei das Sauerstoffgas Sauerstoff aufweist, das durch ein Wandern über die Brennstoffzelle von Luft separiert wird.

5. Ein Energieerzeugungsverfahren nach einem der vorhergehenden Ansprüche, umfassend den zusätzlichen Schritt des Separierens von unreagiertem Kohlenmonoxid von dem Kohlendioxid, das von der Brennstoffzelle freigegeben wird.

6. Ein Energieerzeugungsverfahren nach Anspruch 5, wobei das separierte Kohlenmonoxid oxidiert wird, wobei die Oxidation Wärme erzeugt, um die Produktion von Kohlenmonoxid aus Kohlendioxid und Kohlenstoff oder einem Kohlenwasserstoff und/oder die Produktion von Kohlendioxid durch eine Kalzinierung eines Metalloxids anzutreiben.

7. Ein Energieerzeugungsverfahren nach einem der vorhergehenden Ansprüche, umfassend den zusätzlichen Schritt des Absonderns des Kohlendioxids.

8. Ein Energieerzeugungsverfahren nach einem der vorhergehenden Ansprüche, umfassend den zusätzlichen Schritt des Rekarbonisierens des Metalloxids, das in dem Schritt des Herstellens des Kohlendioxids aus der Kalzinierung eines Metallkarbonats erzeugt worden ist.

9. Eine Vorrichtung, umfassend eine Kalzinierungseinheit in Fluidverbindung mit einer Brennstoffzelle, wobei die Reaktionen a) und b) des Energieerzeugungsverfahrens nach einem der vorhergehenden Ansprüche in der Kalzinierungseinheit ausgeführt werden und wobei die Reaktion c) nach einem der vorhergehenden Ansprüche in der Brennstoffzelle ausgeführt wird.

10. Eine Vorrichtung nach Anspruch 9, wobei die Kalzinierungseinheit in thermischer Verbindung mit der Brennstoffzelle ist.

11. Eine Vorrichtung nach Anspruch 9 oder 10, wobei die Brennstoffzelle eine Festoxidbrennstoffzelle ist.

12. Eine Vorrichtung nach einem der Ansprüche 9 bis 11, wobei die Kalzinierungseinheit ein Fließbett umfasst.

13. Eine Vorrichtung nach einem der Ansprüche 9 bis 12, umfassend einen Nachbrenner in Fluidverbindung mit der Brennstoffzelle zum Empfang von unoxidiertem Kohlenmonoxid.

**Revendications**

1. Procédé de génération d'énergie comprenant les étapes suivantes :

a) calcination d'un carbonate métallique pour produire un oxyde métallique et du dioxyde de carbone ;
b) réaction du dioxyde de carbone avec du carbone et/ou un hydrocarbure pour produire du monoxyde de carbone ; et
c) oxydation du monoxyde de carbone en dioxyde de carbone dans une pile à combustible.

2. Procédé de génération d'énergie selon la revendication 1, dans lequel le carbonate métallique comprend du carbonate de calcium.

3. Procédé de génération d'énergie selon la revendication 1 ou la revendication 2, dans lequel l'oxydation comprend une oxydation avec du gaz oxygène.

**4.** Procédé de génération d'énergie selon la revendication 3, dans lequel le gaz oxygène comprend l'oxygène séparé de l'air par migration à travers la pile à combustible.

**5.** Procédé de génération d'énergie selon l'une quelconque des revendications précédentes, comprenant l'étape additionnelle de la séparation du monoxyde de carbone non réagi du dioxyde de carbone libéré par la pile à combustible.

**6.** Procédé de génération d'énergie selon la revendication 5, dans lequel le monoxyde de carbone séparé est oxydé, l'oxydation générant de la chaleur pour commander la production de monoxyde de carbone à partir du dioxyde de carbone et du carbone, ou d'un hydrocarbure ; et/ou la production de dioxyde de carbone par calcination d'un oxyde métallique.

**7.** Procédé de génération d'énergie selon l'une quelconque des revendications précédentes, comprenant l'étape supplémentaire de séquestration du dioxyde de carbone.

**8.** Procédé de génération d'énergie selon l'une quelconque des revendications précédentes, comprenant l'étape supplémentaire de recarbonation de l'oxyde métallique produit dans l'étape de production du dioxyde de carbone à partir de la calcination d'un carbonate métallique.

**9.** Appareillage comprenant une unité de calcination en communication fluide avec une pile à combustible, dans lequel les réactions a) et b) du procédé de génération d'énergie selon l'une quelconque des revendications précédentes sont effectuées dans l'unité de calcination et la réaction c) selon l'une quelconque des revendications précédentes est effectuée dans la pile à combustible.

**10.** Appareillage selon la revendication 9 dans lequel l'unité de calcination est en communication thermique avec la pile à combustible.

**11.** Appareillage selon la revendication 9 ou la revendication 10, dans lequel la pile à combustible est une pile à combustible à oxyde solide.

**12.** Appareillage selon l'une quelconque des revendications 9 à 11, dans lequel l'unité de calcination comprend un lit fluidisé.

**13.** Appareillage selon l'une quelconque des revendications 9 à 12 comprenant un post-brûleur en communication fluide avec la pile à combustible pour la réception du monoxyde de carbone non oxydé.

Figure 1

Lime (CaO)

Dilute flue gas
(~30% $CO_2$)

$CaCO_3 \rightarrow$
$CaO + CO_2$

Air

Limestone
($CaCO_3$)

Fuel
(typically
natural gas)

Figure 2

Figure 3

$$2CO \quad + \quad O_2 \quad \rightarrow \quad 2CO_2$$

$$Air \quad \rightarrow \quad O_2\text{-deficient air}$$

Figure 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009004529 A
- WO 2008027285 A